# EUROPEAN PATENT APPLICATION

(11) **EP 2 863 407 A1**
(43) Date of publication of application: **22.04.2015**
(21) Application number: 13807638.5
(22) Date of filing: 03.06.2013
(51) Int. Cl.: H01H 33/666, H01H 33/38, H01H 33/42

(54) **OPERATION DEVICE, VACUUM OPENING/CLOSING DEVICE, AND METHOD FOR ASSEMBLING OPERATION DEVICE**

(30) Priority: 18.06.2012 JP 2012136496
(71) Applicant: Hitachi, Ltd., Tokyo 100-8280 (JP)
(72) Inventor: HAE Takamitsu, Chiyoda-ku Tokyo 100-8280 (JP); MORITA, Ayumu, Chiyoda-ku Tokyo 100-8280 (JP); NAKAZAWA, Akio, Chiyoda-ku Tokyo 100-8280 (JP); KAWAKAMI, Hisao, Chiyoda-ku Tokyo 100-8280 (JP); YOKOSUKA, Shigeru, Chiyoda-ku Tokyo 100-8280 (JP); WATANABE, Ryuichi, Chiyoda-ku Tokyo 100-8280 (JP); TONOSAKI, Hironori, Chiyoda-ku Tokyo 100-8280 (JP); TSUCHIYA, Kenji, Chiyoda-ku Tokyo 100-8280 (JP)
(74) Representative: MERH-IP Matias Erny Reichl Hoffmann
(86) International application number: PCT/JP2013/065315
(87) International publication number: WO 2013/190984

(57) **Abstract**

The object of the present invention is to provide a reliability-improved operation device, vacuum opening/closing device, and method for assembling an operation device. In order to attain the above-mentioned object, the operation device includes an electromagnet 40 generating operation power, a movable rod capable of being moved by the operation power generated from the electromagnet 40, a support member having a stopper member stopping the movement of the movable rod, a condenser 11 supplying electric current to the electromagnet 40, a control board 10, and a casing 1 housing the electromagnet 40, the support member, the condenser 11, and the control board 10 therein, the support member being fixed to a surface in the casing 1 which is different from surfaces of the casing onto which the condenser 11 and the control board 10 are fixed.

## Description

### Technical Field

The present invention relates to an operation device, vacuum opening/closing device, and method for assembling an operation device and, more particularly, to installation of an electromagnet into an operation device.

### Background Art

As an operation device of an electromagnetic operation-type for an opening/closing device, there is an operation device disclosed in Patent Literature 1, for example. The operation device disclosed in the Patent Literature 1 includes an electromagnet arranged in a casing and generating operation power, a movable rod supported between a casing-bottom surface of the casing and the electromagnet, a condenser arranged on the casing-bottom surface of the casing for an electromagnet power source, a control board fixed to a lateral surface of the casing, etc. By the operation power from the operation device, a main contact is closing-operated or opening-operated.

In the Patent Literature 1, the electromagnet, together with a break spring, is fixed to a casing-bottom surface and, by causing the rod penetrating a center of the electromagnet to be vertically moved, the main contact of a breaker section is closed or opened. The vertical movement of the rod is stopped by a shock absorber installed on the casing-bottom surface, or a stopper.

### Citation List

### Patent Literature

Patent Literature 1: Japanese Patent Application Laid-Open No. 2004-152625

### Summary of Invention

### Technical Problem

According to the Patent Literature 1, the stopper of the vertically moving rod is present on the casing-bottom surface at the time of the closing-operation or opening-operation of the main contact, whereby shock is transmitted directly to the casing-bottom surface, so that vibration is easy to be applied to the condenser that is also installed on the casing-bottom surface. Therefore, the use of the operation device for a long time causes, for example, looseness of a wiring of the condenser or the like to occur, so that there is a room for more improving reliability. Moreover, the electromagnet and the stopper are connected at the time of assembling an entire operation device and the assembling work is carried out in the casing whose space is limited, so that the work is made complicated.

Therefore, the object of the present invention is to provide a reliability-improved operation device and vacuum opening/closing device.

Moreover, the object of the present invention is to provide a method for assembling an operation device, which can simplify work progresses.

### Solution to Problem

In order to solve the problem, the operation device according to the present invention includes an electromagnet generating operation power, a movable rod capable of being moved by the operation power generated from the electromagnet, a support member having a stopper member stopping the movement of the movable rod, a condenser supplying electric current to the electromagnet, a control board, and a casing housing the electromagnet, the support member, the condenser, and the control board therein, the support member being fixed to a surface in the casing which is different from surfaces onto which the condenser and the control board are fixed.

The method for assembling an operation device according to the present invention, the operation device comprising an electromagnet generating operation power, a movable rod capable of being moved by the operation power from the electromagnet, a support member having a stopper member stopping the movement of the movable rod, a condenser supplying electric current to the electromagnet, a control board, and a casing housing the electromagnet, the support member, the condenser, and the control board therein, includes the steps of integrally forming the electromagnet with the support member and fixing the integrally formed electromagnet and support member to the casing.

### Advantageous Effects of Invention

According to the present invention, it is possible to provide a reliability-improved operation device, vacuum opening/closing device, and method for assembling an operation device.

### Brief Description of Drawings

Figure 1 is a rear view of a vacuum opening/closing device according to an embodiment;
Figure 2 is a side sectional view of the vacuum opening/closing device according to the embodiment;
Figure 3 is an enlarged view of a neighborhood of a stopper according to the embodiment; and
Figure 4 is a top sectional view of the vacuum opening/closing device according to the embodiment.

### Description of Embodiments

An embodiment of the present invention will be explained hereinafter with reference to the drawings. Incidentally, the following description is absolutely made for the embodiment and has no intent to limit the contents of the present invention to the below-mentioned embodiment. The present invention itself can be embodied in various modifications other than the following embodiment.

### EMBODIMENT

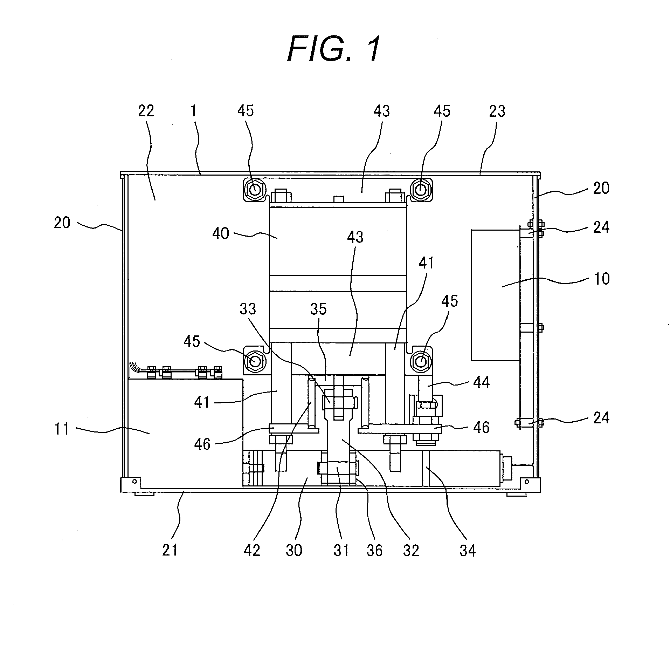

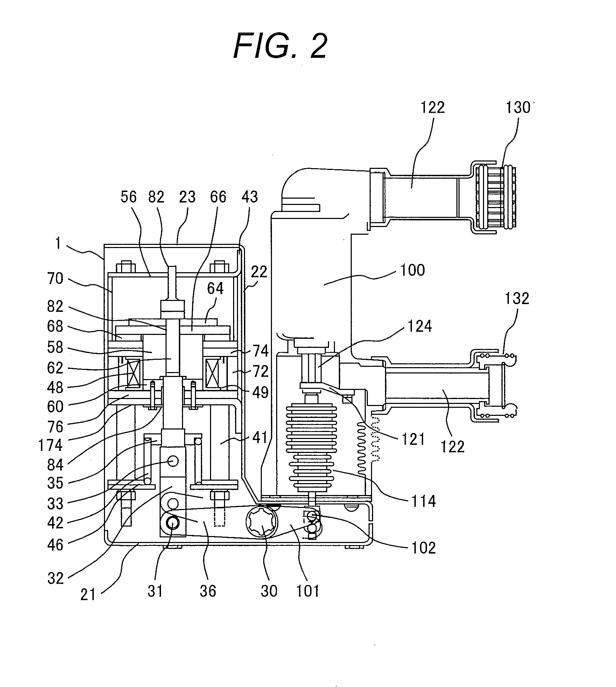

Referring to Figs. 1 to 4, the embodiment is explained. Fig. 1 is a configuration view of an operation device when a casing interior is viewed from a casing front. Fig. 2 is a center sectional view of Fig. 1.

In the interior of a casing 1, an electromagnet 40 arranged at a center of the interior of the casing 1, a condenser 11 supplying electric current to the electromagnet 40 and arranged on a bottom surface 21 of the casing and on the side of a lateral surface of the interior of the casing 1, and a control board 10 fixed via a vibration-proofing member 24 to a lateral surface 20 of the casing, which is opposite to the lateral surface 20 of the casing, on which the condenser 11 is arranged, with respect to the electromagnet 40, and controlling operation of the electromagnet 40 are housed. In the interior of the casing 1, an auxiliary contact transmitting to an exterior a opening/closing status signal of a breaker section 100 operated by operation power generated from the electromagnet 40, an indicator board indicating the opening/closing status signal, a counter counting the number of opening/closing operations, etc. (which are not shown) further housed.

Referring to Figs. 1 and 2, a structure of the electromagnet 40 is explained. The electromagnet 40 includes a rod 62 vertically penetrating centers of a support plate 174 and support plate 76, a stationary iron core 60 supported on the support plate 174 and the support plate 76 and arranged around the movable rod 62, a movable iron core 58 connected to the rod 62 on the stationary iron core 60, a coil 48 arranged on outer peripheral sides of the stationary iron core 60 and movable iron core 58, two movable planar plates 64, 66 arranged on an upper side of the movable iron core 58 and fixed to the movable iron core 58, a support plate 74 arranged at an upper part of the coil 48 on the outer peripheral side of the movable iron core 58, a permanent magnet 68 arranged between the support plate 74 and the movable planar plate 66, a cover 70 connected to the support plate 74 and covering an outside of an upper portion of an electromagnet 14, and a plate 56 connected to the cover 70 and serving as a lid for the upper part of the electromagnet 14. On the outer peripheral side of the coil 48, a side leg 72 is arranged. The coil 48 is housed in a coil bobbin 49 which is arranged between the support plate 74 and the support plate 76. The rod 62 is arranged at a center portion of the electromagnet 40 and arranged along a vertical direction. Moreover, the rod 62 is inserted at an upper portion side thereof in a through-hole 82 of the plate 56 and inserted at a lower portion side thereof in a through-hole 84 of the support plate 76, and is configured to be vertically movable and slidably movable. The movable iron core 58 and the movable planar plates 64, 66 are fixed to an outer peripheral surface of the rod 62 by using a nut. A shaft 32 is connected to the lower portion side of the rod 62 via a pin 33. The rod 62 is connected at a portion thereof lower than the support plate 174 to the shaft 32 via the pin 33. Moreover, the stationary iron core 60 is fixed onto the support plate 76 via a bolt. The two movable planar plates 64, 66 that are different in size are mounted to the rod 62. This is because a distance between the upper movable planar plate 64 and the iron-made cover 70 which are opposed to each other is increased and leakage flux to the iron-made cover 70 is reduced. Moreover, a pressing plate 35 is connected to the lower portion side of the rod 62. A ring-shaped break spring 42 that makes a circle around a shaft center of the rod 62 is mounted between the pressing plate 35 and a support plate 46. This break spring 42 is adapted to give, via the pressing plate 35, elastic force for separating the movable iron core 58 from the stationary iron core 60 to the rod 62. Moreover, the permanent magnet 68 is arranged around the movable iron core 58 and fixed to the indicator plate 74. The pressing plate 35 is connected to one end of the break spring 42. The other end of the break spring 42 is connected to the support plate 46. The pressing plate 35 acts together with the shaft, whereby the break spring 42 is operatively expanded and contracted, and accumulates or releases the elastic force. Moreover, the lower portion side of the shaft 32 is connected to a pair of levers 36 via a pin 31. The levers 36 are configured as elements of a power transmission section playing a role in transmitting drive force, along with electromagnetic force generated from the electromagnet 14, to a movable electrode and are connected to a lever 101 via a three-phase connecting shaft 30. The lever 101 is connected to an insulating rod 114 via a pin 102. The electromagnet 40 causes the rod 62 to be vertically moved by the electromagnetic force, whereby the insulating rod 114 (for three phases) that operates together with the rod 62 is vertically moved to turn on and turn off a main contact (not shown) that is present in an interior of the breaker section 100 (for three phases). The permanent magnet 68 attracts and holds the movable planar plate 64 at the time of turning off the main contact.

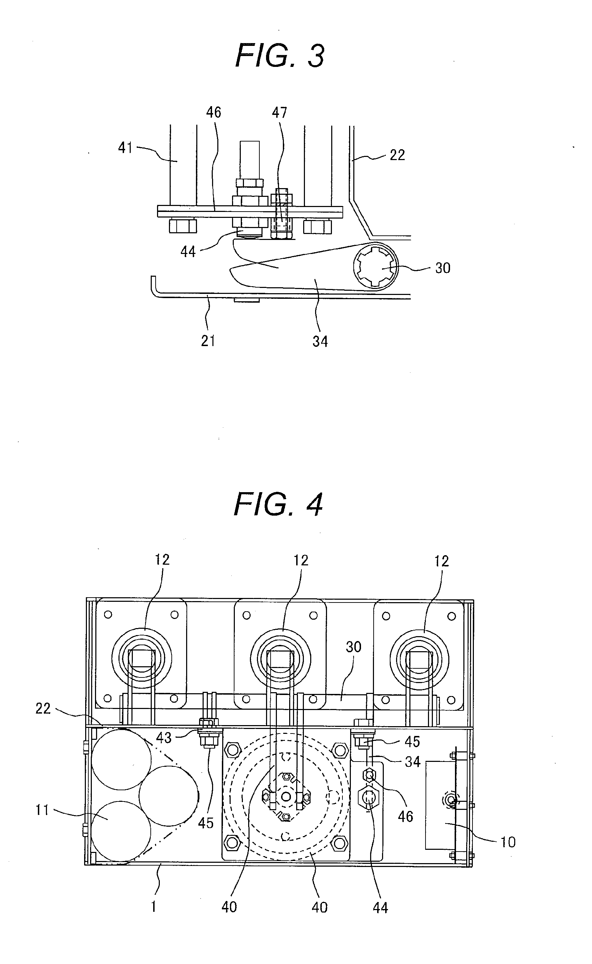

The main contact is configured by a movable contact and a stationary contact and remained in insulating gas or vacuum in an insulating container interior. As shown in Fig. 4, this embodiment includes three vacuum valves for three phases, in an interior of each of which the main contact is housed. A wipe mechanism that applies contact pressure to the main contact is incorporated in an interior of the insulating rod 114. The upper portion side of the insulating rod 114 is connected to a lower contactor 132 via a flexible conductor 121 and a feeder 122 and connected to the movable contact via a movable conductor 124. The stationary contact that faces the movable contact is connected to an upper contactor 130 via the feeder 122. A power cable such as a power line is connected to each contactor.

In this embodiment, the electromagnet 40 is formed integrally with the support plate 46, not contacting the casing 1 (arranged in a floating manner with respect to the casing 1), and a stationary rod 41 connecting the body of the electromagnet 40 and the support plate 46 and, thereafter, is fixed, via a mounting plate 43, to a rear surface 22 of the casing by a bolt 45. The support plate 46 supports a lower end of the break spring 42 arranged between the support plate 46 and the electromagnet 40. Moreover, as shown in Fig. 3, a shock absorber 44 and a stopper 47 are supported by the lower side of the support plate 46. The three-phase connecting shaft 30 has a lever 34 disposed more adjacent to the lateral surface side of the casing 1, in addition to the levers 36 connected with the main contact. Although the lever 34 is rotated with the rotation of the three-phase connecting shaft 30, the upward movement of the lever 34 is stopped by abutting of the lever 34 against the shock absorber 44 and the stopper 47. The stopping of the lever 34 also stops the movement of other levers connected to the three-phase connecting shaft 30. Thereby, it is possible to determine a stopping position. The break spring 42 causes the movable iron core 58 to be moved away from the stationary iron core 60 by the elastic force to thereby turn off the main contact. At this time, the shaft 32 is moved in an upward direction of a vertical direction and, in conjunction with this, the lever 34 connected to the three-phase connecting shaft 30 is also moved in the upward direction. Fig. 3 illustrates an enlarged view of a neighborhood of the lever 34 as viewed from the casing-lateral surface. The shock absorber 44 and the stopper 47 are stopped by striking of the lever 34 against them, whereby the upward movement of the rod 62 and shaft 32 along with turning on of the main contact is stopped.

Thanks to the presence of the shock absorber 44 and stopper 47, a shock which is generated by kinetic energy, which a movable component such as the shaft 32, etc. has, and elastic energy of the spring is transmitted to the support plate 46. Incidentally, vibration generated due to this shock is not propagated directly to the casing-bottom surface 21 and is in turn propagated to the stationary rod 41, the mounting plate 43 and the casing-rear surface 22 and, thereafter, arrives at the casing-lateral surfaces 20 and the casing-bottom surface 21. Therefore, as compared to a case where the stopper is installed directly on the casing-bottom surface 21, an influence of the vibration on the condenser installed on the casing-bottom surface 21 is reduced and probability of occurrence of a defect, for example, the looseness of the wiring, is reduced. Similarly, the influence of the vibration on the control board 10 installed on the casing-lateral surface 20 can be reduced and the probability of the occurrence of the defect can be reduced.

The fixing manner of the electromagnet 40 to the casing 1 is explained with reference to Fig. 4. Fig. 4 is a configuration view of an electromagnetic operation device when the casing interior is viewed from the casing-bottom surface. As shown in this Figure, the electromagnet 40 is fixed at a three-phase interphase position to the casing-rear surface 22 by the bolt 45. The three vacuum valves for three phases are lined up in parallel to the casing-rear surface 22, onto which the mounting plate 43 is fixed, among the surfaces of the casing 1. Inside the rear surface to which the mounting plate 43 is fixed, the mounting plate 43 is fixed with respect to the casing 1 by the bolt 45 provided at the interphase position among the vacuum valves for three phases. At the interphase position, a workspace for allowing bolt-fastening or the like to be performed can be obtained, so that the fixing work of the electromagnet is made easier.

In this embodiment, the support plate 46 which has the stopper 47 stopping the movement of the rod 62 is arranged on the surface in the casing 1 that is different from the surfaces onto which the condenser 11 and the control board 10 are fixed, so that the vibration of the movable rod is not transmitted directly to the condenser 11 and the control board 10, and reliability can be improved.

More specifically, the support plate 46 is formed separatedly (floatedly) from the casing-bottom surface of the casing 1 and, on the other hand, the condenser 11 is installed on the casing-bottom surface of the casing 1 and the control board 10 is installed on the lateral surface side of the casing 1. Thereby, the propagation of the vibration from the rod 62 is made more difficult, and the reliability is improved.

Moreover, although as described above in this embodiment, the support plate 46 which has the stopper 47 stopping the movement of the rod 62 is arranged on the surface in the casing 1 that is different from the surfaces onto which the condenser 11 and the control board 10 are fixed, even in a case where the condenser 11 and the control board 10 are arranged on the same surface, if they are connected to the surface via any vibration-proofing member, the shock due to the vibration can be relieved.

Although the control board 10 and the support plate 46 having the stopper 47 stopping the movement of the rod 62 are not arranged on the same surface inside the casing 1 in this embodiment, the control board 10 is fixed with respect to the casing via the vibration-proofing member.

Moreover, in this embodiment, the electromagnet 40 is formed integrally with the support plate 46, so that they can be mounted integrally to the casing and work process can be simplified. That is, the electromagnet 40 and the support plate 46 are integrally formed, thereafter, assembly sequences such as mounting of them to the casing 1 can be prepared, fixing may be made sufficient by one-time fixing with respect to an integral structure including the electromagnet 40 and, as compared to a case where the respective members are separately present and are all mounted to the casing, work in the casing whose space is limited is reduced and efficiency of the work is improved. Particularly, the fixing with respect to the casing by the mounting plate 43 is applied to the rear surface, so that mounting step that is performed from a downward direction of the casing 1 and is poor in working property is not required and is more simplified as compared to a case where any fixed portion is provided on the bottom surface. As long as the fixed portion is not applied to the bottom surface, this effect can be also exerted, for example, even in a case where the fixed portion is applied to an upper surface or lateral surface of the casing.

Moreover, if the mounting plate 43 for fixing the electromagnet 40 employed in this embodiment to the casing-rear surface 22 is formed of high rigidity material (for example, stainless steel or the like), the mounting plate 43 can be used as not only a mounting member but also a member for reinforcing the casing (rib). In this case, the rigidity of the casing is increased to thereby reduce deflection, thus resulting in an effect of suppressing an increase in the energy required for causing the movable component such as the shaft 32 to be vertically moved.

Moreover, the rib is extended to the right end or left end direction of the casing-rear surface 22 (in a vertical direction when the mounting plate 43 is vertically arranged) so as to be formed as a fixing member having a length more than that of the electromagnet, whereby the function of the rib can be more improved. Moreover, the mounting plate 43 is made longer than a width of one inner surface of the casing (a height of the one inner surface of the casing when the mounting plate 43 is mounted in a height direction), and is formed so as to have a curved shape, and can be fixed to the surface of the casing 1, onto which the electromagnet 40 is fixed, and any surface of the casing 1 other than the surface of the casing 1 onto which the electromagnet 40 is fixed, whereby the mounting plate 43 has the curved portion and the durability of the mounting plate with respect to multi-directional forces can be improved.

### Reference Signs List

1: Casing
10: Control board
11: Condenser
20: Casing-lateral surface
21: Casing-bottom surface
22: Casing-rear surface
23: Casing-upper surface
24: Vibration-proofing member
30: Three-phase connecting shaft
31, 33, 102: Pin
32: Shaft
34, 36: Lever
35: Pressing plate
40: Electromagnet
41: Stationary rod
42: Break spring
43: Mounting plate
44: Shock absorber
45: Bolt
46, 74, 76: Support plate
47: Stopper
48: Coil
49: Coil bobbin
56: Plate
58: Movable iron core
60: Stationary iron core
62: Rod
64: Movable planar plate
66: Movable planar plate
68: Permanent magnet
70: Cover
72: Side leg
82, 84: Through-hole
100: Breaker section
101: Lever
114: Insulating rod
121: Flexible conductor
122: Feeder
124: Movable conductor
130: Upper contactor
132: Lower contactor
174: Support plate

## Claims

1. An operation device comprising an electromagnet generating operation power, a movable rod capable of being moved by the operation power generated from the electromagnet, a support member having a stopper member stopping the movement of the movable rod, a condenser supplying electric current to the electromagnet, a control board, and a casing housing the electromagnet, the support member, the condenser, and the control board therein,
wherein the support member is fixed to a surface in the casing which is different from surfaces onto which the condenser and the control board are fixed.

2. The operation device according to claim 1, wherein the support member is formed separatedly from a casing-bottom surface of the casing, and the condenser is installed on the casing-bottom surface of the casing.

3. An operation device comprising an electromagnet generating operation power, a movable rod capable of being moved by the operation power generated the electromagnet, a support member having a stopper member stopping the movement of the movable rod, a condenser supplying electric current to the electromagnet, a control board, and a casing housing the electromagnet, the support plate, the condenser, and the control board therein,
wherein the condenser or the control board is fixed to the casing via a vibration-proofing member.

4. The operation device according to any one of claims 1 to 3,
wherein the electromagnet and the support member are integrally formed.

5. The operation device according to any one of claims 1 to 4,
wherein the electromagnet is fixed to the casing by a fixing member having a length longer than that of the electromagnet.

6. The operation device according to claim 5,
wherein the fixing member is longer than a width or height of one inner surface of the casing, has a curved shape, and is fixed to the surface of the casing, onto which the electromagnet is fixed, and any surface of the casing other than the surface of the casing onto which the electromagnet is fixed.

7. A vacuum opening/closing device comprising the operation device according to claim 5 or 6, contacts for three phases performing switch of opening and closing by the operation power generated from the electromagnet, vacuum valves for three phases housing the contacts of the respective phases, and an operation power transmitting section transmitting the operation power from the operation device to the contacts,
wherein the vacuum valves for three phases are lined up in substantially parallel to a surface of the casing onto which the fixing member is fixed, and the fixing member is fixed to the casing inside the surface, onto which the fixing member is fixed, by a fixture provided at an interphase position among the vacuum valves for three phases.

8. A method for assembling an operation device comprising an electromagnet generating operation power, a movable rod capable of being moved by the operation power generated from the electromagnet, a support member having a stopper member stopping the movement of the movable rod, a condenser supplying electric current to the electromagnet, a control board, and a casing housing the electromagnet, the support member, the condenser, and the control board therein, the method comprising the steps of:
integrally forming the electromagnet with the support member; and
fixing the integrally formed electromagnet and support member to the casing.
